## Europäisches Patentamt
### European Patent Office
### Office européen des brevets

(19)

(11) Veröffentlichungsnummer: **0 106 087**
**B1**

(12)

# EUROPÄISCHE PATENTSCHRIFT

(45) Veröffentlichungstag der Patentschrift:
**19.02.86**

(51) Int. Cl.⁴: **B 23 C 5/26**

(21) Anmeldenummer: **83108579.0**

(22) Anmeldetag: **31.08.83**

(54) Kombinationswerkzeug.

(30) Priorität: **07.10.82 DE 3237128**

(43) Veröffentlichungstag der Anmeldung:
**25.04.84 Patentblatt 84/17**

(45) Bekanntmachung des Hinweises auf die Patenterteilung:
**19.02.86 Patentblatt 86/8**

(84) Benannte Vertragsstaaten:
**AT BE CH DE FR GB IT LI NL SE**

(56) Entgegenhaltungen:
**DE - A - 2 454 146**
**DE - A - 3 039 456**

(73) Patentinhaber: **Wilhelm Fette GmbH,
Postfach 1180 Grabauerstrasse 24,
D-2053 Schwarzenbek (DE)**

(72) Erfinder: **Junge, Wilhelm, Tegelkuhl 3,
D-2053 Schwarzenbek (DE)**

(74) Vertreter: **Minetti, Ralf, Dipl.-Ing., Ballindamm 15,
D-2000 Hamburg 1 (DE)**

ACTORUM AG

## Beschreibung

Die Erfindung betrifft ein Kombinationswerkzeug, bestehend aus einem Werkzeug, insbesondere Fräser oder Bohrer, mit einem kegeligen Schaftteil mit einer Gewindebohrung und einer hülsenförmigen Aufnahme, die einen in einem Aufnahmekegel einer Arbeitsspindel einsetzbaren Steilkegel aufweist und eine kegelige Ausnehmung zur Aufnahme des Schaftteiles des Werkzeuges, die koaxial zum Steilkegel angeordnet ist und eine Anzugsschraube aufweist, wobei die Aufnahme am breiten Ende des Steilkegels einen Mitnehmerflansch trägt.

Bekannte Schaftfräser, die einen Durchmesser von mehr als 50 mm aufweisen oder auf besonders leistungsstarken Maschinen zum Einsatz kommen, sind mit einem Steilkegel für den Einsatz im Aufnahmekegel einer Arbeitsspindel versehen, der einteilig mit dem Schaft des Fräsers ausgebildet ist, um eine sichere Mitnahme zu gewährleisten. Derartige Schaftfräser mit Steilkegel erfordern aber auch bei Verwendung unterschiedlicher Stahlqualitäten für den Werkzeugbestandteil und den Steilkegel verhältnismässig hohe Werkzeugkosten, wobei zu berücksichtigen ist, dass der den Steilkegel bildende Werkzeugbestandteil wertlos ist, sobald der Schneidenteil des Werkzeuges aufgebraucht ist.

Um dem abzuhelfen, ist bei einem bekannten Kombinationswerkzeug (DT-GM Nr. 8027894) vorgesehen, dass der Schaftfräser an seinem hinteren Ende eine senkrecht zur Achse stehende ringförmige Anlagefläche trägt, an die sich zwei in axialen Abstand hintereinander angeordnete zylindrische Schaftteilstücke anschliessen, von denen das hintenliegende Schaftteilstück einen geringeren Durchmesser aufweist, als das vorn liegende Schaftteilstück. Ergänzend dazu besitzt die Fräsenhülse an ihrem vorderen Ende eine Anlagefläche und dahinter eine Aufnahme mit zwei zylindrischen Teilabschnitten, die unter kleiner Passungstoleranz den beiden im Durchmesser unterschiedlich grossen Schaftteilen entsprechen. Damit lässt sich zwar die Fertigung und Anwendung von Schaftfräsern verbilligen, zumal nach einem Aufgebrauch des Fräsers der den Steilkegel aufweisende Bestandteil für weitere Fräsereinsätze wieder verwendbar ist. Bei der bekannten Gestaltung des Schaftfräsers und seiner Aufnahme, sind ihrer Anwendung in der Praxis jedoch enge Grenzen gesetzt. Das ist insbesondere darauf zurückzuführen, dass zwischen den zylindrischen Schaftteilstücken des Fräsers und den zugehörigen Bohrungen der Aufnahme nicht eine spielfreie Verbindung besteht und damit ein absolut zentrischer Sitz nicht gegeben ist. Dieser Mangel tritt insbesondere dann in Erscheinung, wenn im Verlauf der Zeit der fortlaufend wiederbenutzten Aufnahme ein sogenannter «Passungsrost» auftritt, der auch an den Schaftteilstücken des Werkzeuges auftreten kann und eine ausreichende Passung verhindert. Liegen andererseits aber sehr enge Toleranzen vor zwischen den zylindrischen Schaftteilstücken und den entsprechenden Bohrungen der Auflage, so ist es schwierig, den Fräser mit seinen Schaftabschnitten in die Aufnahme hinein zu drücken bzw. einzuführen und aus dieser zu einem späteren Zeitpunkt wieder herauszuziehen oder herauszudrücken, zumal dafür bei dem bekannten Werkzeug keine Hilfsmittel in Anspruch zu nehmen sind, die Bestandteil dieses Werkzeuges bilden.

Hinzu kommt, dass die Aufnahme und das Werkzeug eine verhältnismässig grosse Baulänge haben, wegen des notwendigerweise grossen axialen Abstandes der beiden zylindrischen Schaftteilstücke und ihrer Auflageflächen. Um einen solchen ausreichenden Abstand zur Verfügung zu haben, ist bei dem bekannten Werkzeug vorgesehen, an der Stirnseite des hülsenförmigen Steilkegels einen Mitnehmerflansch anzuordnen und vor diesem liegend einen zylindrischen Bund, welcher mit seiner Bohrung dasjenige Schaftteilstück mit dem grösseren Durchmesser aufnimmt, sowie mit Mitnehmer, die in Nuten des Schaftes vom Werkzeug eingreifen, welcher vor dem ersten Schaftteilstück liegt. Dabei liegt die Anlagefläche des Schaftteiles vom Fräser an der rückwärtigen Stirnseite des zylindrischen Bundes, welcher seinerseits vor dem ersten zu lagernden Schaftteilstück liegt. Das aber bedeutet einen relativ grossen Abstand der planen Anlageflächen zu dem Rand der Steilkegelhülse an dem diese ihren grössten Durchmesser aufweist, was für die Halterung des Kombinationswerkzeuges bei Belastung durch seitlich angreifende Kräfte von Nachteil ist.

Nach der DIN Nr. 6364 ist eine Zwischenhülse mit Steilkegel für die Aufnahme eines Werkzeuges bekannt, die für eine spielfreie Selbstzentrierung eine kegelige Ausnehmung zur Aufnahme des Schaftteiles des Werkzeuges aufweist, die koaxial zum Steilkegel angeordnet ist und eine Anzugsschraube für das Werkzeug aufweist. Bei dieser bekannten Anordnung ist die Steifigkeit eng begrenzt durch den Kegeldurchmesser. Ausserdem führt auch diese Ausführung zu einer unerwünscht grossen Baulänge.

Aufgabe der Erfindung ist es, ein Kombinationswerkzeug zu schaffen, das bei einer spielfreien Selbstzentrierung des Werkzeuges in der Aufnahme und einer geringen baulichen Länge eine hohe Steifigkeit gegen seitlich angreifende Kräfte besitzt.

Als Lösung sieht die Erfindung vor, dass bei einem Kombinationswerkzeug der eingangs genannten Art das Werkzeug vor dem kegeligen Schaftteil eine ringförmige Anlagefläche, und dass die hülsenförmige Aufnahme an der vorderen Stirnseite des Mitnehmerflansches unmittelbar an die kegelige Ausnehmung anschliessend eine ringförmige Anlagefläche aufweist, wobei sich Werkzeug und Aufnahme zusätzlich mit ihren Anlageflächen berühren.

Die Erfindung liegt somit darin, die spielfreie Kegelverbindung mit einer Bundanlage zu kombinieren. Das ist vorteilhafter, als wenn der Kegel spielfrei sitzt und die Planflächen noch einen geringen Abstand voneinander haben oder wenn die Planflächen aneinander liegen, aber die Kegelverbindung noch Spiel hat. Die erfindungsgemässe Lösung nutzt demgegenüber die elastische Verformbarkeit des Werkstoffes aus und erreicht einen spielfreien Sitz der Kegelaufnahme bei gleichzeiger fester Anlage der Planflächen. Um die dazu erforderlichen Kräfte aufzubringen ist es ein bevorzugtes Merkmal der Erfindung, einen kurzen Kegel mit einer geringen Kegelsteigung von nur etwa 1:30 vorzusehen. Diese Vorteile können auch dann ausgenutzt werden, wenn in die hülsenförmige Aufnahme anstelle eines Werkzeuges eine Werkzeugverlängerung mit der gleichen Art eingesetzt wird, die ihrerseits erst das Werkzeug trägt.

Die Vorteile der Anwendung der kegelförmigen Aufnahme in Verbindung mit der Ringbundanlage gemäss der Erfindung liegen neben der Selbstzentrierung auch in der leichteren Handhabung des Werkzeuges beim Zusammensetzen und beim Trennen seiner Bestandteile und der Möglichkeit einer nur sehr geringen baulichen Länge bei der die Anlageflächen zwischen Werkzeug und Aufnahme unmittelbar in dem Bereich des grössten Durchmessers vom Steilkegel der Aufnahme liegen.

Weitere Merkmale der Erfindung bilden Gegenstand der Unteransprüche.

Ein Ausführungsbeispiel ist nachstehend unter Bezugnahme auf eine Zeichnung erläutert. Darin zeigen:

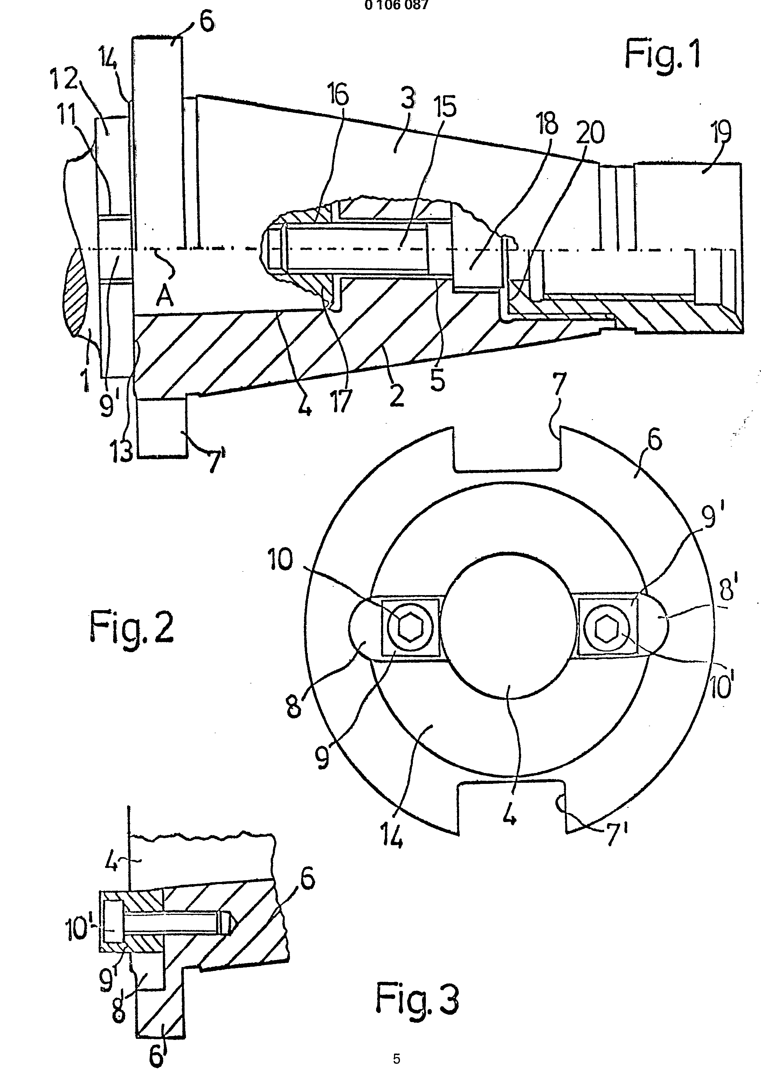

Fig. 1: Ein Kombinationswerkzeug in der Seitenansicht teilweise im Schnitt;

Fig. 2: die Aufnahme in der Vorderansicht und

Fig. 3: ein Teilausschnitt der Aufnahme mit einem Mitnehmer im Schnitt.

Das in der Zeichnung wiedergegebene Kombinationswerkzeug besteht aus einem Schaftfräser 1 und einer hülsenförmigen Aufnahme 2. Die Aufnahme 2 besitzt einen Steilkegel 3, der in einem Aufnahmekegel der Arbeitsspindel einer Werkzeugmaschine einzusetzen ist.

Die Aufnahme 2 ist mit einer zentrisch angeordneten kegelförmigen Ausnehmung 4 versehen und von einer koachsial angeordneten Bohrung 5 durchsetzt. An der vorderen Stirnseite des Steilkegels 3 trägt die Aufnahme 2 einen Mitnehmerflansch 6, der mit zwei sich diametral gegenüberstehenden Eingriffsnuten 7 und 7' versehen ist. An der Vorderseite des Mitnehmerflansches 6 sind zwei Nuten 8 und 8' eingearbeitet, die sich ebenfalls diametral gegenüber liegen und zu den Eingriffsnuten 7 und 7' gleichmässig über den Umfang verteilt angeordnet sind. In beiden Nuten 8 und 8' liegt ein Mitnehmer 9 bzw. 9', der jeweils durch eine Schraube 10 bzw. 10' gehalten ist. Die beiden Mitnehmer 9 und 9' greifen jeweils in eine Nut 11 des Schaftfräsers 1 ein, die am Aussenrand eines radial über den Schaft des Schaftfräsers 1 vorstehenden Ringflansches 12 angeordnet sind. Der Ringflansch 12 weist eine ringförmige Planfläche 13 auf, die senkrecht zu der Achse A des Schaftfräsers 1 und der Aufnahme 2 ausgerichtet ist. Mit dieser Planfläche 13 liegt der Schaftfräser 1 bündig auf einer ringförmigen Planfläche 14 auf, welche die kegelförmige Bohrung 4 der Aufnahme 2 an ihrer Mündung umschliesst.

Für ein Verspannen des Schaftfräsers 1 mit der Aufnahme 2 ist eine Spannschraube 15 vorgesehen, die in eine Gewindebohrung 16 eines kegelförmigen Schaftteiles 17 eingeschraubt ist. Dieser kegelförmige Schaftteil 17 bildet einen Bestandteil des Schaftfräsers 1 und ruht in der kegelförmigen Ausnehmung 4, der er in Form und Grösse angepasst ist. Die Steigung des Kegels vom Schaftteil 17 und der Ausnehmung 4 ist nur sehr gering. Sie beträgt etwa 1:30.

Die Spannschraube 15, die sich durch die konzentrisch angeordnete Bohrung 5 erstreckt, stützt sich beim Anziehen mit ihrem Kopf 18 auf dem Rand der Bohrung 5 ab. Hinter dem Kopf 18 der Spannschraube 15 liegt ein hülsenförmiger Einsatz 19, der in die hülsenförmige Aufnahme 2 von ihrem hinteren Ende her eingeschraubt ist. Wird die Spannschraube gelöst mit einem Werkzeug, das durch den Einsatz 19 hindurchgeführt wird, so stützt sich die Spannschraube mit ihrem Kopf 18 aus der ringförmigen Stirnseite 20 des Einsatzes 19 ab. Ein weiteres Drehen der Spannschraube 15 hat dadurch zur Folge, dass der kegelförmige Schaftteil 17 aus der Ausnehmung 4 herausgedrückt und damit der Schaftfräser 1 von der Aufnahme 2 gelöst wird.

## Patentansprüche

1. Kombinationswerkzeug, bestehend aus einem Werkzeug, insbesondere Fräser oder Bohrer, mit einem kegeligen Schaftteil (1) mit einer Gewindebohrung (16) und einer hülsenförmigen Aufnahme (2), die einen in einem Aufnahmekegel einer Arbeitsspindel einsetzbaren Steilkegel (3) aufweist und eine kegelige Ausnehmung (4) zur Aufnahme des Schaftteiles (17) des Werkzeuges, die koaxial zum Steilkegel angeordnet ist und eine Anzugsschraube (15) aufweist, wobei die Aufnahme am breiten Ende des Steilkegels einen Mitnehmerflansch (6) trägt, dadurch gekennzeichnet, dass das Werkzeug (1) vor dem kegeligen Schaftteil (17) eine ringförmige Anlagefläche (13), und dass die hülsenförmige Aufnahme (2) an der vorderen Stirnseite des Mitnehmerflansches (6) unmittelbar an die kegelige Ausnehmung (4) anschliessend eine ringförmige Anlagefläche (14) aufweist, wobei sich Werkzeug (1) und Aufnahme (2) zusätzlich mit ihren Anlageflächen (13, 14) berühren.

2. Kombinationswerkzeug nach Anspruch 1, dadurch gekennzeichnet, dass die verwendete Kegelsteigung etwa 1:30 beträgt.

3. Kombinationswerkzeug nach Anspruch 1, dadurh gekennzeichnet, dass der kegelige Schaftteil (17) des Werkzeuges (1) ein Verhältnis von Durchmesser zu Länge von etwa 2:3 besitzt.

4. Kombinationswerkzeug nach Anspruch 1, dadurch gekennzeichnet, dass die Aufnahme (3) einen Einsatz (19) trägt, dessen Stirnseite (20) ein Widerlager für den Kopf (18) der Spannschraube (15) bei ihrem Lösen bildet.

5. Kombinationswerkzeug nach Anspruch 1, dadurch gekennzeichnet, dass an den ringförmigen Anlageflächen (13, 14) eine formschlüssige Verbindung (8, 9, 11) vorgesehen ist.

**Revendications**

1. Outil combiné composé d'un outil, en particulier d'une fraise ou d'un foret, avec une partie-tige conique (17) avec une forure filetée (16) et un logement en forme de gaine (2) qui présente un cône fort (3) pouvant être inséré dans un cône de logement d'un arbre moteur, un creux conique (4) pour loger la partie-tige (17) de l'outil situé de manière coaxiale par rapport au cône fort et un boulon à serrer (15), le logement portant une bride d'entraînement (6) à l'extrémité large du cône fort, caractérisé en ce que l'outil (1) présente une surface d'appui (13) annulaire devant la partie-tige conique (17) et que le logement en forme de gaine (2) présente sur la face antérieure de la bride d'entraînement (6) une surface d'appui annulaire (14) directement consécutive au creux conique (4), l'outil (1) et le logement (2) entrant en contact en plus par leurs surfaces d'appui (13, 14).

2. Outil combiné selon la revendication 1, caractérisé en ce que l'obliquité du cône utilisé est d'environ 1:30.

3. Outil combiné selon la revendication 1, caractérisé en ce que la partie-tige conique (17) de l'outil (1) possède un rapport diamètre/longueur d'environ 2:3.

4. Outil combiné selon la revendication 1, caractérisé en ce que le logement (2) porte une insertion (19) dont la face (20) forme une butée pour la tête (18) de la vis de tension (15) lors de son dévissage.

5. Outil combiné selon la revendication 1, caractérisé en ce qu'un raccord claboté (8, 9, 11) est prévu sur les surfaces d'appui annulaires (13, 14).

**Claims**

1. Combination tool composed of a tool, especially a mill or a drill, with a tapered shank-part (17) with a screw drill bore (16) and a case-formed seat (2) which presents a taper (3) to be inserted in the receiving cone of a work spindle and a tapered recess (4) to receive the tapered shank-part (17) of the tool, which is placed coaxial to the taper and which presents a retaining screw (15), whereby the receiving cone supports a driving flange (6) at its wider end, characterized in that the tool (1) presents an annular supporting face (13) in front of the tapered shank-part (17) and that the case-formed seat (2) at the front of the driving flange (6) presents an annular supporting face (14) directly annexed to the tapered recess (4), whereby the tool (1) and the seat (2) are in touch additionally through their supporting faces (13, 14).

2. Combination tool according to Claim 1, characterized in that the used taper comes to about 1:3.

3. Combination tool according to Claim 1, characterized in that the tapered shank-part (17) of the tool has a diameter/length ratio of about 2:3.

4. Combination tool according to Claim 1, characterized in that the seat (2) supports an insert (19), the front (20) of which forms an abutment for the head (18) of the straining screw (15) when unscrewing it.

5. Combination tool according to Claim 1, characterized in that an interlocking connection (8, 9, 11) is foreseen at the annular supporting faces (13, 14).

Fig.1

Fig.2

Fig.3